# EUROPEAN PATENT SPECIFICATION

(11) **EP 2 582 544 B1**
(45) Date of publication and mention of the grant of the patent: **14.12.2016**
(21) Application number: 11796056.7
(22) Date of filing: 15.06.2011
(51) Int. Cl.: B60P 7/12, B62D 33/02

(54) **STAKE ANCHORING ARRANGEMENT**
PFAHLVERANKERUNGSANORDNUNG
AGENCEMENT D'ANCRAGE DE PIQUET

(30) Priority: 18.06.2010 SE 1050633
(43) Date of publication of application: 24.04.2013
(73) Proprietor: Exte Fabriks AB, 820 41 Färila (SE)
(72) Inventor: ERIKSSON, Hans, S-827 33 Ljusdal (SE); WALLSTRÖM, Lennart, S-827 35 Ljusdal (SE); JÖNSSON, Finn, S-820 41 Färila (SE)
(74) Representative: Brann AB
(86) International application number: PCT/SE2011/050738
(87) International publication number: WO 2011/159239

(56) References cited:
- EP-A1- 0 098 250
- WO-A1-93/24344
- GB-A- 1 048 810
- GB-A- 1 048 810
- SE-B- 306 242
- SE-B- 432 396
- SE-B- 451 987
- SE-B- 463 759

## Description

### Technical field of the Invention

The present invention relates in general to a disengageable anchoring of a load shifting protection in a load carrying structure of a truck, a railway wagon or any other craft. In particular the present invention relates to a stake anchoring arrangement for the anchoring of a stake in a load carrying structure, the stake anchoring arrangement comprising an upwardly open socket which is arranged to be connected to the load carrying structure and which comprises a front wall and a back wall opposite the front wall, furthermore the stake anchoring arrangement comprises a wedge assembly that is arranged to act between the front wall of the socket and a stake axially lowerable into the socket. It shall be pointed out that even thus within the technical field recognized term "stake" for sake of simplicity has been used in the claims as well as in the description, it shall be realized that also other types as well as other terms of load shifting protection are included, such as supports, posts, limb anchoring posts, etc.

### Background of the Invention and Prior art

During transportation of cargo on any conceivable vehicle/craft, such as trucks, trailers, railway wagons, ships, etc., there is almost always a need to secure the cargo from being shifted in the longitudinal direction and/or the transverse direction of the vehicle. An elucidating example, which shall not be considered limiting for the present invention, is a truck having a flat loading platform. The truck shall at one occasion transport timber, the truck driver placing a row of a number of upright stakes along each of the two longitudinal edges of the loading platform. Thereafter the timber is placed on the loading platform oriented in the longitudinal direction of the truck, the stakes acting as load shifting protection in the transverse direction of the truck. After the timber has been unloaded from the truck it shall transport big laying cement culverts, the truck driver placing stakes in front of, behind and on each side of the cement culverts, thereby the stakes acts as load shifting protection in the longitudinal direction and the transverse direction of the truck. Thereafter the truck shall transport big upright boards, the truck driver placing two longitudinal rows of stakes in the middle of the loading platform. The boards are placed between the two adjacent rows of stakes, the stakes acting as load shifting protection in the transverse direction of the truck. It is readily realized that the loading platform must have a stake anchoring arrangement that is flexible in such a way that the driver must be able to adapt the appearance/configuration of the loading platform in an easy way out on the roads without the need of work shop tools. Theoretically a loading platform having a large number of round sockets in which round stakes easily can be lowered into and removed from be a solution, however, there are both laws stating and demands from the drivers that the stakes shall be secured/locked to the load carrying structure such that the stakes cannot jump out of the sockets during transportation, or rattle or shake when without load.

Flexible, disengageable anchoring of stakes in stake anchoring arrangements can be divided into two main groups, a first group using a locking mechanism arranged in the stake and a second group using a locking mechanism arranged in or at the socket.

Example of disengageable anchoring in stake anchoring arrangements belonging to the first group are shown in EP0244383 and SE451987, wherein the locking mechanism is arranged in the stake and after the stake has been lowered into the socket the driver activates the locking mechanism by turning a control by means of a large special wrench. The locking mechanism then engages the socket and prevents the stake from jumping out of the socket. A disadvantage is that each separate stake must comprise a locking mechanism making each stake expensive and complicated to manufacture, at the same time as each stake becomes unnecessarily heavy and cumbersome for the driver to handle. Moreover, such solutions are also suffer from the problem that the stakes rattle and shake in the sockets, especially when without load when the truck is driven unloaded, which is irritating for the driver and damageable for the stake as well as for the socket.

Example of disengageable anchoring of stake anchoring arrangements belonging to the second group are shown in SE451009 and WO93/24344, in which the stakes in the lower end thereof comprises threaded holes. A bolt is arranged in a through hole in the bottom of the socket and screwed into the threaded hole of the stake from below, the bolt pulling the stake downwards towards the bottom of the socket. In this way the stake is prevented from jumping out of the socket, however, also these solutions suffer from the problem that the stakes when without load rattle and shake in the sockets, which also may result in the bolt coming loose. Moreover, it is cumbersome to reach the bolts at the underside of the loading platform. In applications when the stakes shall be placed in the middle of the loading platform it can even be impossible to reach the underside of the socket. Example of attempts to solve the problem of rattle and shaking are described in SE405235 and SE463759, that uses different types of wedge assemblies in order to press the stake against the walls of the socket. The shown wedge assemblies uses two interacting wedge members which are axially displaced in relation to each other by means of a bolt and nut arrangement. Even thus these solutions tolerable solve the problem of rattle and shaking the above-mentioned problem of difficulties of reaching the bolts and nuts of the locking mechanism remains.

### Object of the Invention

The present invention aims at obviating the above-mentioned disadvantages and failings of previously known stake anchoring arrangements and at providing an improved stake anchoring arrangement. A primary object of the invention is to provide an improved stake anchoring arrangement of the initially defined type, which admits automatic, disengageable anchoring of the stake in the socket during lowering of the stake therein, which in other words have in view that no tools are needed in order to anchor the stake in the socket.

It is another object of the present invention to provide a stake anchoring arrangement, that does not need any specific procedures in order to anchor the stake in the socket.

It is another object of the present invention to provide a stake anchoring arrangement that prevents the stake to rattle or shake in the socket.

It is yet another object of the present invention to provide a stake anchoring arrangement that in connection with removal of the stake is primed to the next lowering/anchoring of a stake.

### Summary of the Invention

According to the invention at least the primary object of the invention is attained by the initially defined stake anchoring arrangement, which is characterized in that the front wall incline in the direction of the back wall, and in that the wedge assembly comprises a catch, a spring member and a wedge member, the catch being turnably arranged about a pivot from a primed position to an activated position under the action of the axially lowerable stake, thereto the catch is arranged when in the primed position to maintain the wedge member in a lower position and when in the activated position set the wedge member in a disengaged condition, the wedge member when in the disengaged condition being axially displaceable from the lower position to an upper position under the action of the spring member in order to wedge said axially lowerable stake between the wedge member and the back wall of the socket.

Thus the present invention is based on the insight that by using the stake to activate the locking mechanism, which in its turn locks the stake the more the stake rattle and shake, an easy handling of the stakes is obtained without the need of special tools or procedures.

Preferred embodiments of the present invention are further defined in the independent claims.

Preferably the catch comprises a shoulder arranged to be activated by the axially lowerable stake and means for engagement with the wedge member. Thereto the wedge member comprises a first surface arranged to abut the front wall of the socket, a second surface arranged to abut the axially lowerable stake and means for engagement with the catch. Which entail that the stake upon lowering thereof will activate the wedge assembly, whereupon the wedge member will lock the stake in the socket.

According to a preferred embodiment the wedge assembly is arranged to take a primed condition, in which the wedge member is in the lower position, the catch is in the primed position, and in which the wedge member engagement means of the catch is in engagement with the catch engagement means of the wedge member and the spring member is in a biased position acting to displace the wedge member from the lower position to the upper position, and take an activated condition, in which the shoulder of the catch is activated by the axially lowerable stake whereupon the catch is turned to the activated position, the wedge member engagement means of the catch is disengaged from the catch engagement means of the wedge member and the wedge member is displaced to the upper position under the action of the spring member in order to wedge the axially lowerable stake between the second surface of the wedge member and the back wall of the socket.

In yet another preferred embodiment the wedge member engagement means of the catch is constituted by a lower groove, and the catch engagement means of the wedge member is constituted by a pin arranged transverse said grove, which is displaceable in relation to said pin. This entail that the catch and the wedge member are connected to each other and hangs together as a single unit.

Preferably the catch engagement means of the wedge member is arranged to prevent the catch from turning from the activated position to the primed position when the wedge member is displaced from the lower position.

Preferably the catch also comprises means for engagement with the axially lowerable stake, the stake engagement means of the catch being arranged to maintain said stake in the lowered position when the catch is in the activated position. This entail that even thus the wedge member by any reason cannot on its own succeed to retain the stake in the socket the stake is prevented from being pulled out of the socket by means of the catch.

Preferably the wedge assembly also comprises a base plate, the pivot being supported by said base plate, and the spring member is arranged between the base plate and the wedge member. This entail that the wedge assembly is constituted by a connected unit that can be removed from the socket.

Further advantages with and features of the invention will be apparent from the other independent claims as well as from the following detailed description of preferred embodiments.

### Brief description of the drawings

A more complete understanding of abovementioned and other features and advantages of the present invention will be apparent from the following detailed description of preferred embodiments in conjunction with the enclosed drawings, wherein:
- Fig. 1: is a cutaway side view of a first embodiment of the present stake anchoring arrangement in the primed condition,
- Fig. 2: is a cutaway side view from above of the stake anchoring arrangement according to the first embodiment,
- Fig. 3: is a perspective exploded view of the stake anchoring arrangement according to the first embodiment of the stake anchoring arrangement,
- Fig. 4: is a perspective exploded view of an alternative embodiment of the stake anchoring arrangement according to the first embodiment of the stake anchoring arrangement,
- Fig. 5: is a side view of the stake anchoring arrangement according to figure 3,
- Fig. 6: is a cutaway side view of the wedge member taken along line VI-VI in figure 5,
- Fig. 7: is a cutaway side view of the stake anchoring arrangement shown in figure 1 in a state between the primed and the activated condition,
- Fig. 8: is a cutaway side view of the stake anchoring arrangement shown in figure 1 in the activated condition, and

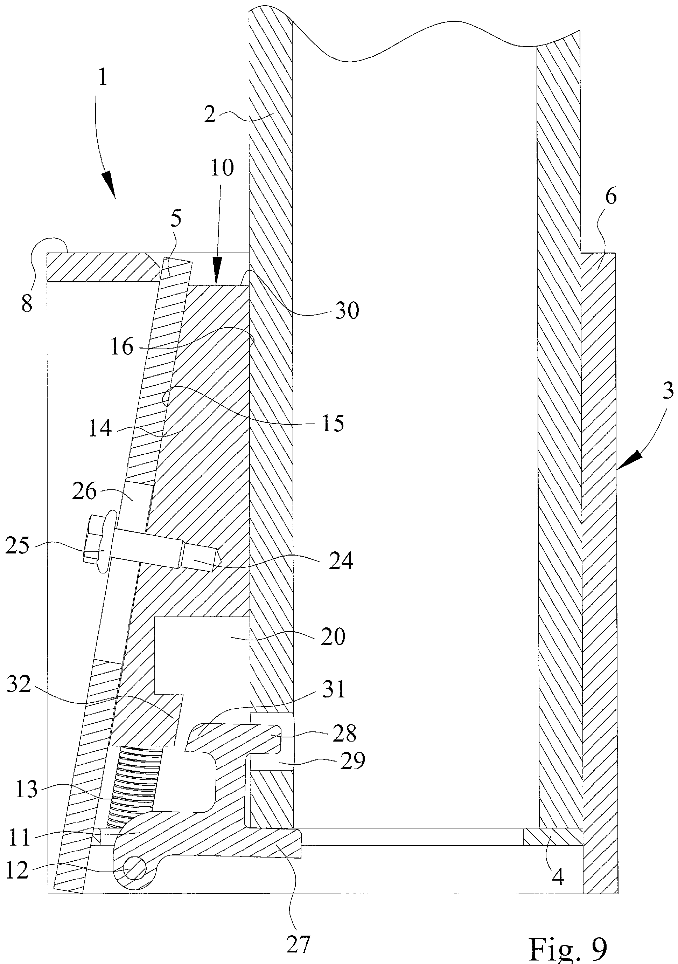

- Fig. 9: is a cutaway side view of a second embodiment of the present stake anchoring arrangement in the activated condition.

### Detailed description of preferred embodiments

The present invention relates in general to a disengageable anchoring of a load shifting protection in a load carrying structure of a craft, such as the load carrying frame of a vehicle or the load carrying deck of a ship. The load carrying structure can be constituted by for instance a loading platform or a bolster of a bunk (not shown).

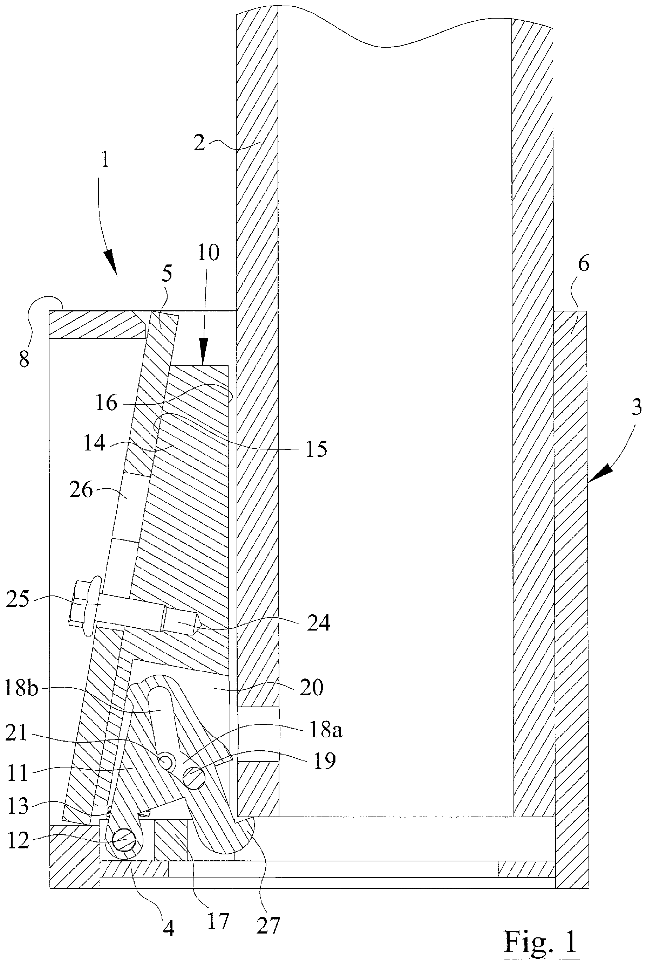

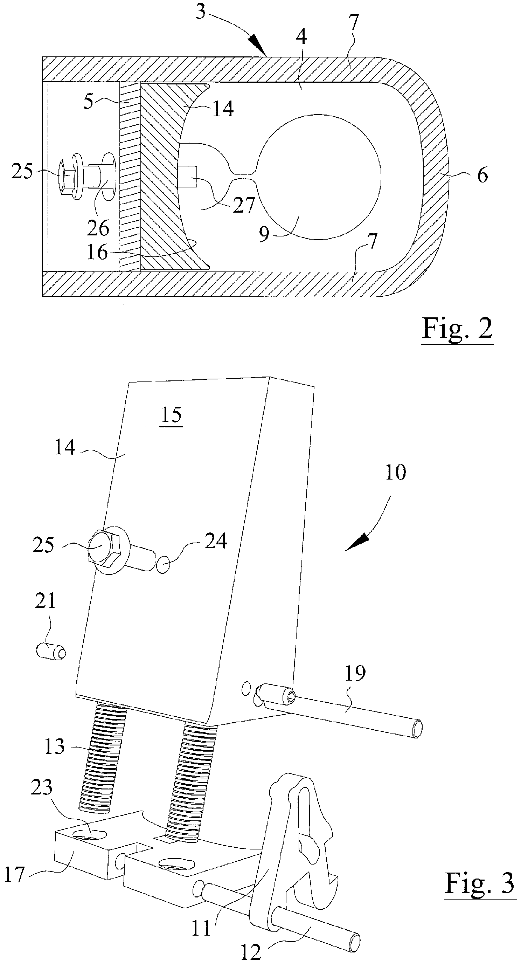

Reference is initially made to figure 1, in which is shown a first embodiment of the inventive stake anchoring arrangement, generally designated 1, for the anchoring of a stake 2 in a load carrying structure (not shown), as well as to figure 2, in whish is shown a cutaway view from above of the stake anchoring arrangement according to figure 1. The stake 2 is preferable tubular and made out of aluminum, high strength steel or any other suitable material in order to be as light as possible. The stake anchoring arrangement 1 comprises an upwardly open socket, generally designated 3, comprising a circumferentially extending wall and a bottom 4, which together defines a seat for the axially lowerable stake 2. When the stake 2 is in the anchored state in the socket 3 at least a part of the lower end of the stake 2 shall preferably abut and be supported by the bottom 4 of the socket 3. The circumferentially extending wall of the socket 3 comprises a front wall 5 and a back wall 6 opposite to the front wall, as well as opposite side walls 7 which extends between the front wall 5 and the back wall 6. The socket 3 is arranged to be connected, fixedly or releasably, to the load carrying structure in any suitable way. Preferably the socket 3 is arranged in such a way that its upper surface 8 is arranged on the same level as the load carrying surface of the load carrying structure. The bottom 4 of the socket 3 preferably present one or more through holes 9, such that litter, snow, rain and such does not risk to be accumulated in the socket 3, which otherwise would prevent correct lowering of the stake 2 in the socket 3. Thereto at least the upper part of the front wall 5 of the socket 3 shall incline in the direction towards the back wall 6, in order to present a wedge surface. The feature that the front wall 5 shall incline in the direction towards the back wall 6, thus also includes that only the upper part of the front wall 5 incline in the direction backwards. The inclination angle α shall be bigger than 5 degrees preferably bigger than 10 degrees, at the same time as the inclination angle α of the front wall 5 shall be less than 30 degrees preferably less than 15 degrees. The back wall 6 of the socket 3 shall in its turn be generally parallel to the back wall of the stake 2 and preferably the back wall 6 of the socket 3 correspond to the configuration of the stake 2 in the area of the lower end thereof, and is in the shown embodiment concavely arch shaped seen in the horizontal plane. It shall be pointed out that when the stake 2 is lowered into the socket 3 and its front wall is loaded in the direction from the front wall 5 of the socket 3 towards the back wall 6 it is important that the back wall of the stake 2 abut, direct or indirect, the back wall 6 of the socket 3 in the area of the upper end thereof. In the shown embodiment the back wall 6 has a generally vertical extension.

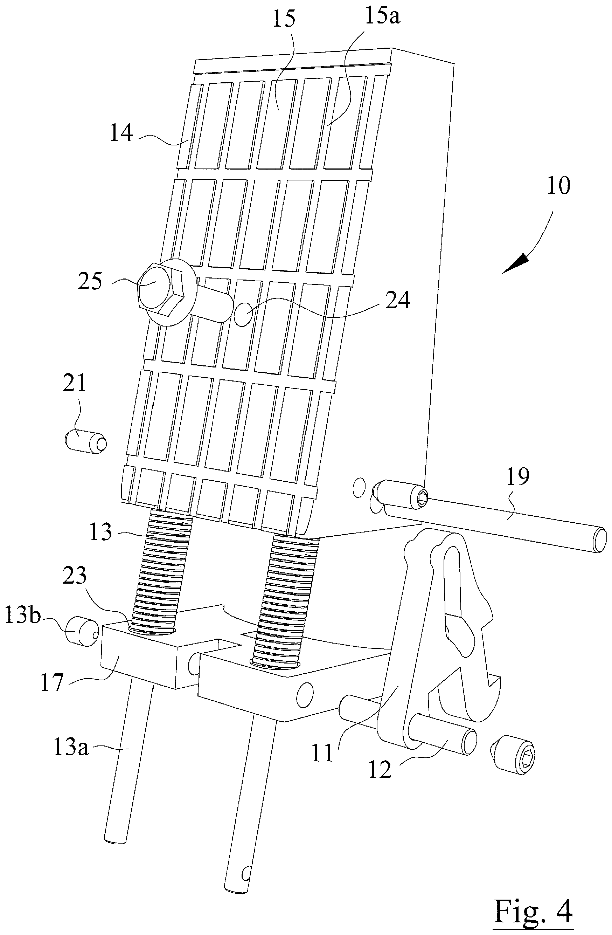

Further, the stake anchoring arrangement 1 comprises a wedge assembly, generally designated 10, see also figures 3, 5-6, which shows a wedge assembly 10 according to the preferred first embodiment of the present invention, and figure 4, which shows an alternative embodiment of the wedge assembly 10 according to the preferred first embodiment of the present invention. The wedge assembly 10 is arranged to act between the front wall 5 of the socket 3 and the front wall of the stake 2 which is axially lowerable into the socket 3.

According to the invention the wedge assembly 10 comprises a catch 11, which is turnably arranged about a pivot 12, at least one spring member 13 and a wedge member 14, which is axially displaceable in relation to the socket 3 as will be described in more detail below.

The wedge member 14 comprises a first surface 15 arranged to abut the front wall 5 of the socket 3 and a second surface 16 arranged to abut the front wall of the socket 2. The first surface 15 of the wedge member 14 incline in the same extent as the front wall 5 of the socket 3, and the second surface 16 of the wedge member 14 is generally parallel to the front wall of the stake 2. Furthermore, the front wall 16 of the wedge member 14 presents a complementary shape in relation to the front wall of the stake 2 and is in the shown embodiment concavely arc shaped seen in the horizontal plane. It shall be pointed out that the shown concavity of the back wall 6 of the socket 3 and the second surface 16 of the wedge member 14 acts centering and aligns the stake 2, which does not necessarily need to be arranged to abut the side walls 7 of the socket 3. In the shown first embodiment the wedge assembly 10 also comprises a base plate 17, in which the pivot 12 of the catch 11 is arranged. The first surface 15 of the wedge member 14 may preferably present at least one recess (15a, for instance in the shape of axially extending and/or transversally extending groves, see figure 4. The object of said recess 15a is to decrease the abutment surface between the wedge member 14 and the front wall 5 of the socket 3, and preferably also to scrape off possible litter from the front wall 5 of the socket 3 and accumulate in the groove 15a in order to avoid that the function of the wedge member 14 is affected. It shall be pointed out that in the embodiment in which the wedge member 14 comprises such grooves 15a, they shall preferably end at a distance from the upper edge of the first surface 15 of the wedge member 14, such that litter shall not find its way down between the wedge member 14 and the socket 3.

The catch 11 comprises means for engagement with the wedge member 14, which wedge engagement means in the shown embodiment is constituted by a lower groove 18a arranged in the catch 11. The lower groove 18a is preferably arc shaped. The wedge member 14 comprises in its turn means for engagement with the catch 11, which catch engagement means in the shown embodiment is constituted by at least one transverse rod 19, which extends transverse a recess 20 in the wedge member 14 and at the same time is in engagement with the lower groove 18a of the catch 11 that is movably housed in the recess 20. Preferably the lower groove 18a is arranged through the catch 11 and the transverse rod 19 extends through the lower groove 18a and the recess, the transverse rod 19 being connected to the wedge member 14 on each side of the recess 20. Furthermore, the wedge member 14 in the shown embodiment comprises at least one snap member 21, which in the shown embodiment is constituted by a cartridge shaped holder having a spring biased ball and which is arranged to cooperate with the lower groove 18a of the catch 11 and thus constitutes yet another catch engagement means.

The spring member 13 is arranged to displace the wedge member 14 in the axial direction upwards in relation to the socket 3. In the shown embodiment the spring member 13 is constituted by a helical spring arranged in a bore 22 in the wedge member 14, which bore 22 preferably is arranged in parallel with the first surface 15 of the wedge member 14. The bore 22 shall preferably have a significant length such that the effective force of the spring member 13 shall not change in considerable extent concurrently with the axial displacement of the wedge member 14 and the pressed spring member 13 is elongated. Furthermore, the base plate 17 preferably comprises a seat 23 for the spring member 13 in order to prevent displacement in the radial direction of the lower end of the spring member 13. Thereto it is preferred that the wedge assembly 10 comprises a guide rod 13a for the respective spring member 13, which guide rod 13a is arranged in the spring member 13 and prevents the spring member 13 from bulging in the transverse direction and thereby a correct function of the wedge assembly 10 is secured. The guide rod 13a is preferably connected to the base plate 17, for instance by means of stop screws 13b, which entail that the guide rod 13a also constitute a guide for the axial movement of the wedge member 14. It shall be pointed out that the guide rod 13a also may be connected to the wedge member 14, or be loosely arranged in the spring member 13.

The wedge assembly 10 is arranged to take a primed condition, awaiting a stake 2 being lowered into and anchored in the socket 3, and an activated condition when the stake 2 is anchored in the socket 3. Reference is now made especially to figures 1, 6 and 7.

In figure 1 the wedge assembly 10 is in the primed condition at the same time as a stake 2 is lowered into the socket 3. In order to prevent that the wedge assembly 10 from running the risk of falling and preventing correct lowering of the stake 2, the wedge member 14 comprises a threaded hole 24, which mouth in the first surface 15 of the wedge member 14 and in which a screw 25 is screwed into. The head of the screw 25 is located at the opposite side of the front wall 5 of the socket 3 in relation to the wedge member 14 and the stem of the screw 25 runs freely through an axially extending groove 26 arranged in the front wall 5 of the socket 3. Thus, the wedge assembly 10 is prevented from falling against the back wall 6 of the socket 3 when the stake 2 is not in the lowered state, at the same time as the wedge member 14 is allowed to be displaced in the axial direction. Preferably the groove 26 has a so called keyhole shape in which the groove 26 in its upper end presents a larger diameter than the head of the screw 25, in order to admit that the screw 25 can be screwed into the hole 24 in the wedge member 24 and thereafter the wedge assembly 10 is applied in the socket 3 by running the screw 25 through and engaging the groove 26. This entail also that one and the same wedge assembly 10 may be used in several sockets 3, dependent on which socket of several sockets shall be used at the moment.

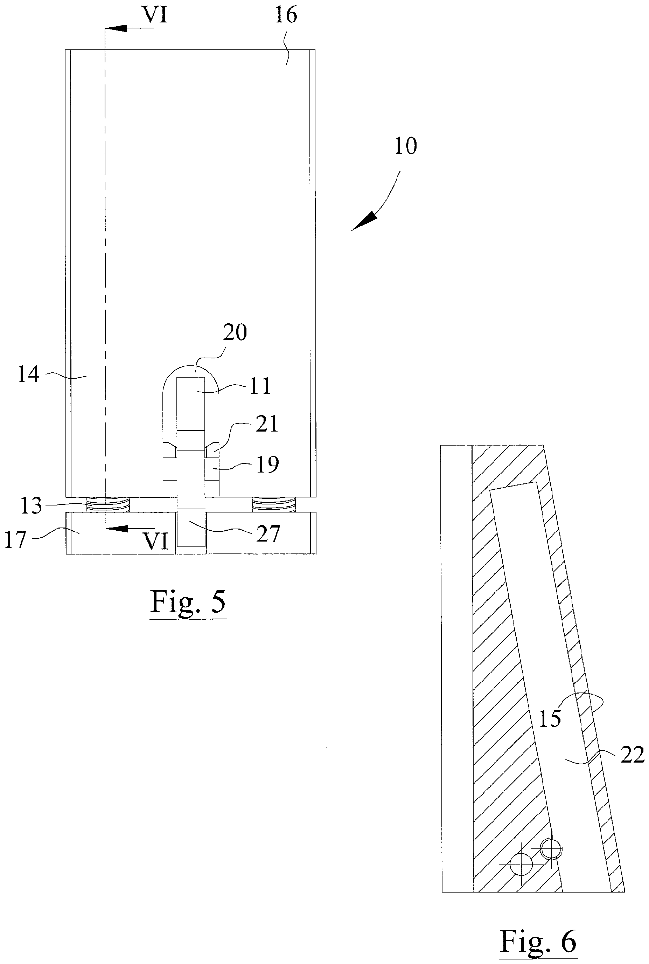

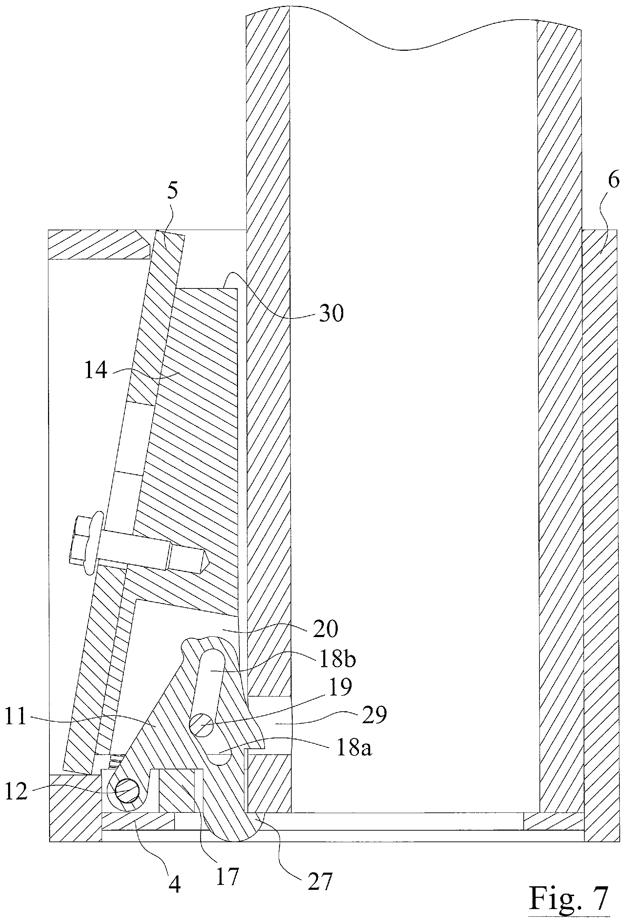

In the primed condition of the wedge assembly 10 the wedge member 14 is located in a lower position by pressing the wedge member 14 down towards the base plate 17 against the action of the spring member 13, which thereby is in a biased position acting to displace the wedge member 14 from the lower position to an upper position in which the stake 2 is secured. Upon pressing of the wedge member 14 towards the base plate 17 the catch 11 is in an activated position (see figures 6 and 7) and the transverse rod 19 of the wedge member 14 runs in an upper groove 18b of the catch 11, which upper groove 18b is generally straight and arranged generally parallel to the first surface 15 of the wedge member 14. When the transverse rod 19 reaches the lower end of the upper groove 18b the wedge member 14 has reached its lower position. Thereafter the catch 11, for instance by hand, can be turned to a primed position (see figure 1), during which turning the transverse rod 19 runs in the lower arc shaped groove 18a of the catch 11, wherein the arc centre of the groove 18a generally coincide with the pivot 12 of the catch 11. It shall be pointed out that the lower groove 18a of the catch 11 and the upper groove 18b of the catch 11 thus overlap or join each other. Thus the catch 11 is arranged to when in the primed position retain the wedge member 14 in the lower position by having the wedge engaging means 18a of the catch 11 in engagement with the catch engaging means 19 of the wedge member 14 when the catch 11 is in the primed position, which prevents the wedge member 14 from being displaced from the lower position to the upper position. In an alternative not shown embodiment the arc centre of the lower groove 18a is offset in relation to the pivot 12 such that the wedge member 14, under the action of the spring member 13, is displaced a short distance away from the base plate 17 at the same time as the catch 11 turns from the activated position to the primed position. In the embodiment the wedge member 14 also comprises said snap member 21, the snap member 21 shall be located at such a place in the recess 20 of the wedge member 14 that it will engage the lower groove 18a and/or the upper groove 18b of the catch 11 when the catch 11 is turned to the primed position, the snap member 21 retaining the catch 11 in the primed position. It shall be pointed out that the wedge assembly 10 can be brought to the primed condition before as well as after it has been applied to the socket 3. Upon lowering of the stake 2 into the socket 3 the wedge member 14 is located at a distance from the front wall of the stake 2.

The catch 11 also comprises a shoulder 27 arranged to engage the stake 2 upon lowering of the stake 2 into the socket 3. Preferably the shoulder 27 is arranged to engage the lower end of the stake 2. In figure 1 the stake 2 is lowered and has just come into contact with the shoulder 27 of the catch 11. Upon further lowering of the stake 2, by means if its inherent weight, the catch 11 is forced to turn from the primed position to the activated position, see figure 7, whereupon the wedge member 14 is set in a disengaged condition. Preferably the lower end of the stake 2 abuts the bottom of the socket 3 when the catch 11 is in the activated position. In figure 7 the wedge engaging means 18 of the catch 11 has disengaged the catch engaging means 19 of the wedge member 14 during the turn of the catch 11 to the activated position. In the disengaged condition the wedge member 14 is axially displaceable from the lower position to the upper position. It shall be pointed out that the wedge member 14 cannot retain in the lower position when the catch 11 is in the activated position, as is shown in figure 7, instead figure 7 is only a snapshot of the lapse.

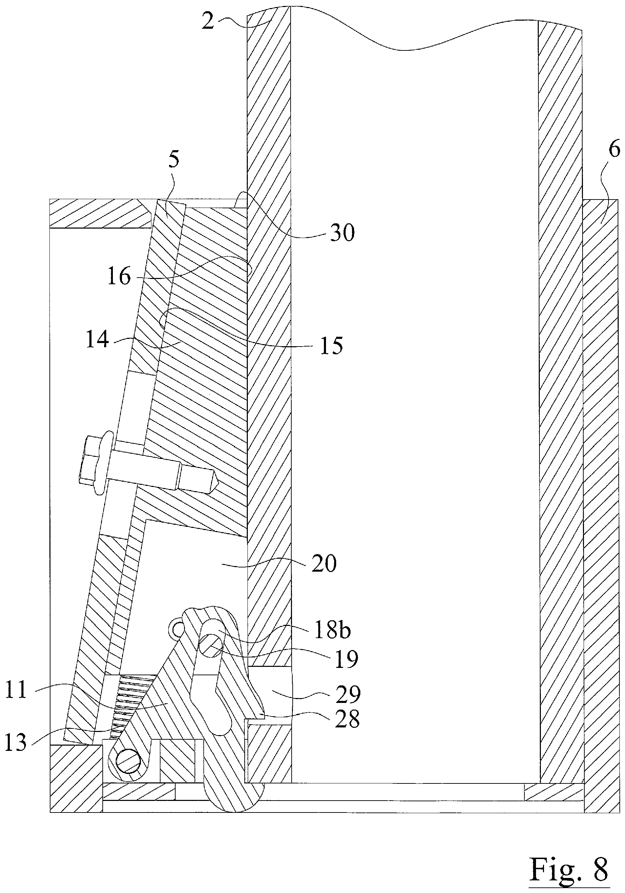

In figure 8 the wedge member 14 has been displaced to the upper position under the action of the spring member 13. In the upper position the first surface 15 of the wedge member 14 abuts the front wall 5 of the socket 3 at the same time as second surface 16 of the wedge member 14 abuts the front wall of the stake 2, in order to anchor/clamp the axially lowerable stake 2 between the second surface 16 of the wedge member 14 and the back wall 6 of the socket 3. It shall be pointed out that if the stake 2 moves the wedge member 14 will be displaced more and more upwards and thereby clamp the stake 2 harder towards the socket 3.

In the shown first embodiment of the stake anchoring arrangement 1 the catch 11 preferably also comprises a means for engagement with the stake 2. The stake engagement means of the catch 11 is arranged to prevent the stake from being pulled out of the socket 3 when the wedge member 14 is displaced from the lower position. This may for instance take place if oil, leaf, dirt, etc., has attached to one of more abutment surfaces between the socket 3, the stake 2 and the wedge member 14. In the shown first embodiment of the stake anchoring arrangement 1 the stake engaging means of the catch 11 is constituted by a claw 28 arranged above the shoulder 27 of the catch 11. The claw 28 of the catch 11 is arranged to engage a recess 29 in the front wall of the stake 2 when the catch 11 is in the activated position, and arranged to be disengaged from said recess 29 when the catch 11 is in the primed position. Thereto it shall be pointed out that when the wedge member 14 is displaced from the lower position the transverse rod 19 of the wedge member 14 is located in the upper groove 18b of the catch 11, the catch 11 being prevented from turning from the activated position and thereby the claw 28 of the catch 11 retains the stake 2 in the socket 3. Furthermore the claw of the catch also has the function of reprime the wedge assembly 10 upon removal of the stake 2 from the socket 3. When the wedge member 14 is pressed down to the lower position by applying a force to the upper surface 30 of the wedge member 14 the catch 11 is allowed to turn from the activated position to the primed position, at the same time as the stake 2 is no longer clamped between the wedge member 14 and the back wall 6 of the socket 3. Upon subsequent removal of the stake 2 the recess 29 of the stake 2 will lift the claw 28 of the catch 11 whereupon the catch 11 will turn from the activated position to the primed position. Thereafter the pressure applied to the upper surface 30 of the wedge member 14 can be removed and the wedge assembly 10 is primed and ready for the next anchoring of a stake 2 in the socket 3. In a not shown alternative and/or supplementary embodiment the catch 11 is turned from the activated position to the primed position by means of a spring in connection with the stake 2 being removed from the socket 3.

Reference is now made to figure 8, in which is shown a second embodiment of the inventive stake anchoring arrangement 1. The stake 2 and the socket 3 are more or less unchanged, and the cooperation between the socket 3, the stake 2 and the wedge member 14 is unchanged, and only differences in relation to the above described first embodiment of the stake anchoring arrangement 1 will be described below.

The wedge assembly 10 comprises a catch 11, a spring member 13 and a wedge member 14. The catch 11 is rotatably arranged about a pivot 12 that in this embodiment is connected to the socket 3, and the spring member 13 acts between the wedge member 14 and the bottom 4 of the socket 3, which entail that the wedge assembly 10 cannot be removed from the socket 3 as a single unit, instead the wedge assembly 10 most be primed when arranged in the socket 3.

The wedge engaging means of the catch 11 is in this embodiment constituted by a finger 31 that, when the wedge member 14 is in the lower position and the catch is in the primed position, is in engagement with the catch engaging means of the wedge member 14 that in this embodiment is constituted by a protrusion 32. The wedge assembly 10 is then in the primed condition (not shown).

Upon lowering of the stake 2 it will engage the shoulder 27 of the catch 11, whereupon the catch 11 turns from the primed position to the activated position. At the same time the wedge engaging means 31 of the catch 11 disengage the catch engaging means 32 of the wedge member 14, whereupon the wedge member 14 is set in a disengaged condition, whereupon the wedge member 14 under the action of the spring member 13 is displaced axially from the lower position to the upper position.

Also in the shown second embodiment of the stake anchoring arrangement 1 the catch 11 preferably comprises a stake engaging means in the shape of a claw 28 arranged above the shoulder 27 of the catch 11. The claw 28 of the catch 11 is arranged to engage a recess 29 in the front wall of the stake 2 when the catch 11 is in the activated position, and arranged to be disengaged from said recess 29 when the catch 11 is in the primed position. Thereto it shall be pointed out that when the catch 11 is in the activated position and the wedge member 14 is displaced from the lower position, the protrusion 32 of the wedge member 14 is located aligned with the finger 31 of the catch 11, the catch 11 being prevented from turning from the activated position and thereby the claw 28 of the catch 11 retains the stake 2 in the socket 3. Thereto the claw 28 of the catch 11 also in this second embodiment has the function of repriming the wedge assembly 10 upon removal of the stake 2 from the socket 3, in the same way as in the first embodiment.

The advantage of the shown second embodiment of the stake anchoring arrangement 1 is that it comprises fewer parts than the first embodiment. The advantage with the first embodiment of the stake anchoring arrangement 1 is that it can be removed from the socket 3 as a single unit and be primed outside the socket 3. However, both embodiments present easy anchoring of a stake 2 in a socket 3.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims. Thus, the equipment may be modified in all kinds of ways within the scope of the appended claims.

It shall also be pointed out that all information about/concerning terms such as upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

## Claims

1. Stake anchoring arrangement for the anchoring of a stake (2) in a load carrying structure, comprising an upwardly open socket (3) which is arranged to be connected to the load carrying structure and which comprises a front wall (5) and a back wall (6) opposite the front wall (5), and a wedge assembly (10) that is arranged to act between the front wall (5) of the socket (3) and a stake (2) axially lowerable into the socket (3), **characterized in that** the front wall (5) inclines in the direction of the back wall (6), and **in that** the wedge assembly (10) comprises a catch (11), a spring member (13) and a wedge member (14), the catch (11) being turnably arranged about a pivot (12) from a primed position to an activated position under the action of the axially lowerable stake (2), thereto the catch (11) is arranged when in the primed position to maintain the wedge member (14) in a lower position and when in the activated position set the wedge member (14) in a disengaged condition, the wedge member (14) when in the disengaged condition being axially displaceable from the lower position to an upper position under the action of the spring member (13) in order to wedge said axially lowerable stake (2) between the wedge member (14) and the back wall (6) of the socket (3).

2. Stake anchoring arrangement according to claim 1, **characterized in that** the catch (11) comprises a shoulder (27) arranged to be activated by the axially lowerable stake (2) and means (18a, 31) for engagement with the wedge member (14).

3. Stake anchoring arrangement according to claim 2, **characterized in that** the wedge member (14) comprises a first surface (15) arranged to abut the front wall (5) of the socket (3), a second surface (16) arranged to abut the axially lowerable stake (2) and means (19, 32) for engagement with the catch (11).

4. Stake anchoring arrangement according to claim 3, **characterized in that** the wedge assembly (10) is arranged to take a primed condition, in which the wedge member (14) is in the lower position, the catch (11) is in the primed position, and in which the wedge member engagement means (18a, 31) of the catch (11) is in engagement with the catch engagement means (19, 32) of the wedge member (14) and the spring member (13) is in a biased position acting to displace the wedge member (14) from the lower position to the upper position.

5. Stake anchoring arrangement according to claim 3 or 4, **characterized in that** the wedge assembly (10) is arranged to take an activated condition, in which the shoulder (27) of the catch (11) is activated by the axially lowerable stake (2) whereupon the catch (11) is turned to the activated position, the wedge member engagement means (18a, 31) of the catch (11) is disengaged from the catch engagement means (19, 32) of the wedge member (14) and the wedge member (14) is displaced to the upper position under the action of the spring member (13) in order to wedge the axially lowerable stake (2) between the second surface (16) of the wedge member (14) and the back wall (6) of the socket (3).

6. Stake anchoring arrangement according to any of claims 3-5, **characterized in that** the wedge member engagement means of the catch (11) is constituted by a lower groove (18a), and the catch engagement means of the wedge member (14) is constituted by a pin (19) arranged transverse said grove (18a), which is displaceable in relation to said pin (19).

7. Stake anchoring arrangement according to any of claims 3-5, **characterized in that** the catch engagement means (19, 32) of the wedge member (14) is arranged to prevent the catch (11) from turning from the activated position to the primed position when the wedge member (14) is displaced from the lower position.

8. Stake anchoring arrangement according any preceding claim, **characterized in that** the catch (11) also comprises means (28) for engagement with the axially lowerable stake (2), the stake engagement means (28) of the catch (11) being arranged to maintain said stake (2) in the lowered position when the catch (11) is in the activated position.

9. Stake anchoring arrangement according any preceding claim, **characterized in that** the catch (11) also comprises a return means for returning the catch (11) from the activated position to the primed position when the wedge member (14) is in the lower position.

10. Stake anchoring arrangement according any preceding claim, **characterized in that** the wedge assembly (10) also comprises a base plate (17), the pivot (12) being supported by said base plate (17).

11. Stake anchoring arrangement according to claim 10, **characterized in that** the spring member (13) is arranged between the base plate (17) and the wedge member (14).

## Patentansprüche

1. Pfahlverankerungsanordnung, zur Verankerung eines Pfahls (2) in einem lasttragenden Aufbau, mit einer nach oben offenen Steckhülse (3), die zum Verbinden mit dem lasttragenden Aufbau angeordnet ist und die eine Vorderwand (5) und eine Rückwand (6) gegenüber der Vorderwand (5) aufweist, und einer Keilbaugruppe (10), die so angeordnet ist, dass sie zwischen der Vorderwand (5) der Steckhülse (3) und einem Pfahl (2) wirkt, der in die Steckhülse (3) axial absenkbar ist, **dadurch gekennzeichnet, dass** sich die Vorderwand (5) in Richtung der Rückwand (6) neigt, und dadurch, dass die Keilbaugruppe (10) eine Arretierung (11), ein Federbauteil (13) und ein Keilbauteil (14) aufweist, wobei die Arretierung (11) um eine Schwenkachse (12) aus einer Vorbereitungsposition in eine aktivierte Position unter der Wirkung des axial absenkbaren Pfahls (2) drehbar angeordnet ist, an der die Arretierung (11) in der Vorbereitungsposition angeordnet ist, um das Keilbauteil (14) in einer unteren Position zu halten und in der aktivierten Position das Keilbauteil (14) in einen ausgerückten Zustand zu versetzen, wobei das Keilbauteil (14) im ausgerückten Zustand aus der unteren Position in eine obere Position unter der Wirkung des Federbauteils (13) axial verschiebbar ist, um den axial absenkbaren Pfahl (2) zwischen dem Keilbauteil (14) und der Rückwand (6) der Steckhülse (3) zu verkeilen.

2. Pfahlverankerungsanordnung nach Anspruch 1, **dadurch gekennzeichnet, dass** die Arretierung (11) eine Schulter (27), die so angeordnet ist, dass sie durch den axial absenkbaren Pfahl (2) aktiviert wird, und eine Einrichtung (18a, 31) zum Eingriff mit dem Keilbauteil (14) aufweist.

3. Pfahlverankerungsanordnung nach Anspruch 2, **dadurch gekennzeichnet, dass** das Keilbauteil (14) eine erste Oberfläche (15), die angeordnet ist, um an der Vorderwand (5) der Steckhülse (3) anzuliegen, eine zweite Oberfläche (16), die angeordnet ist, um an dem axial absenkbaren Pfahl (2) anzuliegen, und eine Einrichtung (19, 32) zum Eingriff mit der Arretierung (11) aufweist.

4. Pfahlverankerungsanordnung nach Anspruch 3, **dadurch gekennzeichnet, dass** die Keilbaugruppe (10) angeordnet ist, um einen Vorbereitungszustand einzunehmen, in dem sich das Keilbauteil (14) in der unteren Position befindet, sich die Arretierung (11) in der Vorbereitungsposition befindet und in dem die Keilbauteil-Eingriffseinrichtung (18a, 31) der Arretierung (11) im Eingriff mit der Arretierungs-Eingriffseinrichtung (19, 32) des Keilbauteils (14) steht und sich das Federbauteil (13) in einer Vorspannungsposition befindet, die so wirkt, dass sie das Keilbauteil (14) aus der unteren Position in die obere Position verschiebt.

5. Pfahlverankerungsanordnung nach Anspruch 3 oder 4, **dadurch gekennzeichnet, dass** die Keilbaugruppe (10) angeordnet ist, um einen aktivierten Zustand einzunehmen, in dem die Schulter (27) der Arretierung (11) durch den axial absenkbaren Pfahl (2) aktiviert wird, woraufhin die Arretierung (11) in die aktivierte Position gedreht wird, die Keilbauteil-Eingriffseinrichtung (18a, 31) der Arretierung (11) aus der Arretierungs-Eingriffseinrichtung (19, 32) des Keilbauteils (14) ausgerückt wird und das Keilbauteil (14) unter der Wirkung des Federbauteils (13) in die obere Position verschoben wird, um den axial absenkbaren Pfahl (2) zwischen der zweiten Oberfläche (16) des Keilbauteils (14) und der Rückwand (6) der Steckhülse (3) zu verkeilen.

6. Pfahlverankerungsanordnung nach einem der Ansprüche 3 bis 5, **dadurch gekennzeichnet, dass** die Keilbauteil-Eingriffseinrichtung der Arretierung (11) durch eine untere Nut (18a) gebildet ist und die Arretierungs-Eingriffseinrichtung des Keilbauteils (14) durch einen Zapfen (19) gebildet ist, der quer zur Nut (18a) angeordnet ist, die in Relation zum Zapfen (19) verschiebbar ist.

7. Pfahlverankerungsanordnung nach einem der Ansprüche 3 bis 5, **dadurch gekennzeichnet, dass** die Arretierungs-Eingriffseinrichtung (19, 32) des Keilbauteils (14) angeordnet ist, um die Arretierung (11) am Drehen aus der aktivierten Position in die Vorbereitungsposition zu hindern, wenn das Keilbauteil (14) aus der unteren Position verschoben ist.

8. Pfahlverankerungsanordnung nach einem der vorstehenden Ansprüche, **dadurch gekennzeichnet, dass** die Arretierung (11) auch eine Einrichtung (28) zum Eingriff mit dem axial absenkbaren Pfahl (2) aufweist, wobei die Pfahl-Eingriffseinrichtung (28) der Arretierung (11) so angeordnet ist, dass sie den Pfahl (2) in der abgesenkten Position hält, wenn sich die Arretierung (11) in der aktivierten Position befindet.

9. Pfahlverankerungsanordnung nach einem der vorstehenden Ansprüche, **dadurch gekennzeichnet, dass** die Arretierung (11) auch eine Rückführeinrichtung zum Rückführen der Arretierung (11) aus der aktivierten Position in die Vorbereitungsposition, wenn sich das Keilbauteil (14) in der unteren Position befindet, aufweist.

10. Pfahlverankerungsanordnung nach einem der vorstehenden Ansprüche, **dadurch gekennzeichnet, dass** die Keilbaugruppe (10) auch eine Grundplatte (17) aufweist, wobei die Schwenkachse (12) durch die Grundplatte (17) gestützt wird.

11. Pfahlverankerungsanordnung nach Anspruch 10, **dadurch gekennzeichnet, dass** das Federbauteil (13) zwischen der Grundplatte (17) und dem Keilbauteil (14) angeordnet ist.

## Revendications

1. Agencement d'ancrage de poteau pour l'ancrage d'un poteau (2) dans une structure porteuse de charge, comprenant une douille ouverte vers le haut (3) qui est agencée pour être raccordée à la structure porteuse de charge et qui comprend une paroi avant (5) et une paroi arrière (6) opposée à la paroi avant (5), et un assemblage de cales (10) qui est agencé pour agir entre la paroi avant (5) de la douille (3) et un poteau (2) pouvant être abaissé axialement dans la douille (3), **caractérisé en ce que** la paroi avant (5) s'incline dans le sens de la paroi arrière (6), et **en ce que** l'assemblage de cales (10) comprend un pêne (11), un organe de ressort (13) et un organe de cale (14), le pêne (11) étant agencé de manière à pouvoir tourner autour d'un pivot (12) d'une position amorcée à une position activée sous l'action du poteau pouvant être abaissé axialement (2), le pêne (11) étant agencé de ce fait, lorsqu'il se trouve à la position amorcée, pour maintenir l'organe de cale (14) à une position inférieure et, lorsqu'il se trouve à la position activée, pour mettre l'organe de cale (14) dans un état hors prise, l'organe de cale (14), lorsqu'il se trouve à la position hors prise, pouvant être déplacé axialement de la position inférieure à une position supérieure sous l'action de l'organe de ressort (13) afin de caler ledit poteau pouvant être abaissé axialement (2) entre ledit organe de cale (14) et la paroi arrière (6) de la douille (3).

2. Agencement d'ancrage de poteau selon la revendication 1, **caractérisé en ce que** le pêne (11) comprend un épaulement (27) agencé pour être activé par le poteau pouvant être abaissé axialement (2) et des moyens (18a, 31) de mise en prise avec l'organe de cale (14).

3. Agencement d'ancrage de poteau selon la revendication 2, **caractérisé en ce que** l'organe de cale (14) comprend une première surface (15) agencée pour venir en butée contre la paroi avant (5) de la douille (3), une deuxième surface (16) agencée pour venir en butée contre le poteau pouvant être abaissé axialement (2) et des moyens (19, 32) de mise en prise avec le pêne (11).

4. Agencement d'ancrage de poteau selon la revendication 3, **caractérisé en ce que** l'assemblage de cale (10) est agencé pour prendre un état amorcé, dans lequel l'organe de cale (14) se trouve à la position inférieure, le pêne (11) se trouve à la position amorcée, et dans lequel les moyens de mise en prise d'organe de cale (18a, 31) du pêne (11) sont en prise avec les moyens de mise en prise de pêne (19, 32) de l'organe de cale (14) et l'organe de ressort (13) se trouve à une position polarisée agissant pour déplacer l'organe de cale (14) de la position inférieure à la position supérieure.

5. Agencement d'ancrage de poteau selon la revendication 3 ou 4, **caractérisé en ce que** l'assemblage de cales (10) est agencé pour prendre un état activé, dans lequel l'épaulement (27) du pêne (11) est activé par le poteau pouvant être abaissé axialement (2), à la suite de quoi le pêne (11) est tourné à la position activée, les moyens de mise en prise d'organe de cale (18a, 31) du pêne (11) sont mis hors prise des moyens de mise en prise de pêne (19, 32) de l'organe de cale (14) et l'organe de cale (14) est déplacé à la position supérieure sous l'action de l'organe de ressort (13) afin de caler le poteau pouvant être abaissé axialement (2) entre la deuxième surface (16) de l'organe de cale (14) et la paroi arrière (6) de la douille (3).

6. Agencement d'ancrage de poteau selon l'une quelconque des revendications 3 à 5, **caractérisé en ce que** les moyens de mise en prise d'organe de cale du pêne (11) sont constitués d'une rainure inférieure (18a), et les moyens de mise en prise de pêne de l'organe de cale (14) sont constitués d'une tige (19) agencée transversalement à ladite rainure (18a), qui est déplaçable par rapport à ladite tige (19).

7. Agencement d'ancrage de poteau selon l'une quelconque des revendications 3 à 5, **caractérisé en ce que** les moyens de mise en prise de pêne (19, 32) de l'organe de cale (14) sont agencés pour empêcher que le pêne (11) ne tourne de la position activée à la position amorcée lorsque l'organe de cale (14) est déplacé de la position inférieure.

8. Agencement d'ancrage de poteau selon l'une quelconque des revendications précédentes, **caractérisé en ce que** le pêne (11) comprend également des moyens (28) pour se mettre en prise avec le poteau pouvant être abaissé axialement (2), les moyens de mise en prise de poteau (28) du pêne (11) étant agencés pour maintenir ledit poteau (2) à la position abaissée lorsque le pêne (11) est à la position activée.

9. Agencement d'ancrage de poteau selon l'une quelconque des revendications précédentes, **caractérisé en ce que** le pêne (11) comprend également un moyen de retour pour retourner le pêne (11) de la position activée à la position amorcée lorsque l'organe de cale (14) est à la position inférieure.

10. Agencement d'ancrage de poteau selon l'une quelconque des revendications précédentes, **caractérisé en ce que** l'assemblage de cale (10) comprend également une embase (17), le pivot (12) étant supporté par ladite embase (17).

11. Agencement d'ancrage de poteau selon la revendication 10, **caractérisé en ce que** l'organe de ressort (13) est agencé entre l'embase (17) et l'organe de cale (14).
